# EUROPEAN PATENT SPECIFICATION

(11) **EP 1 484 463 B1**
(45) Date of publication and mention of the grant of the patent: **13.02.2008**
(21) Application number: 03705397.2
(22) Date of filing: 24.02.2003
(51) Int. Cl.: E05B 49/00, G08G 1/00, B60R 25/10, B60R 25/04

(54) **System and method for managing vehicles**
System und Verfahren zum Verwalten von Kraftfahrzeugen
Système et procédé de gestion de parc automobile

(30) Priority: 28.02.2002 JP 2002053689
(43) Date of publication of application: 08.12.2004
(73) Proprietor: Sony Corporation, Tokyo 141-0001 (JP)
(72) Inventor: SHINADA, Akira, c/o SONY CORPORATION, Tokyo 141-0001 (JP)
(74) Representative: Melzer, Wolfgang
(86) International application number: PCT/JP2003/001964
(87) International publication number: WO 2003/072900

(56) References cited:
- DE-A1- 19 753 401
- DE-C1- 19 917 885
- JP-A- 10 297 435
- JP-A- 11 311 049
- JP-A- 2000 285 287
- JP-A- 2002 024 553
- US-A1- 2001 049 659
- PATENT ABSTRACTS OF JAPAN vol. 2002, no. 05, 3 May 2002 (2002-05-03) -& JP 2002 024553 A (ITOCHU INSURANCE BROKERS CO LTD), 25 January 2002 (2002-01-25)

## Description

### TECHNICAL FIELD

The present invention relates to a vehicle, an electronic key, a data processing apparatus, and a vehicle managing method illustratively for use in managing vehicles in the car rental business. More particularly, the invention relates to techniques for simplifying the management of vehicles by acquiring their actual drive data through the intermediary of electronic keys for locking and unlocking their doors.

### BACKGROUND ART

Traditionally, physical keys have been used to unlock the doors of vehicles and to start up their engines for travel. In recent years, so-called keyless entry devices have been proposed. These devices are designed to lock and unlock the vehicle doors without recourse to physical keys. A typical keyless entry device involves utilizing an electronic key to emit a remote control signal for operating the locking mechanisms of the vehicle doors. For example, the keyless entry device disclosed in Japanese Published Unexamined Patent Application No. 2001-49918 proposes recording and establishing the settings of the vehicle interior environment.

In a conventional management setup involving large numbers of vehicles such as a rental car fleet, car keys are suitably controlled in managing the vehicles, and on-board records such as distances traveled are collected from the vehicles for control over vehicle drive status.

A vehicle managing system in which all features of the precharacterizing part of claim 1 are disclosed, is described in US 2001/0049569 A.

### DISCLOSURE OF INVENTION

It is an object of the present invention to provide a vehicle managing system and a vehicle managing method with which the complexity of managing the numerous vehicles such as rental cars can be reduced.

This object is achieved by a vehicle managing system and a vehicle managing method according to the enclosed independent claims. Advantageous features of the present invention are defined in the corresponding subclaims.

The vehicle managing method according to the present invention enables the actual drive data to be acquired through the intermediary of the electronic key, and allows the acquired data to be processed appropriately for electronic key-based vehicle management.

### BRIEF DESCRIPTION OF DRAWINGS

Fig. 1 is a block diagram of a vehicle management system embodying this invention;
Fig. 2 is a side view of an electronic key for use with the vehicle management system of Fig. 1;
Fig. 3 is a flowchart of steps constituting a process performed by a central processing unit of a vehicle as part of the vehicle management system in Fig. 1;
Fig. 4 is a flowchart of steps constituting a renting process performed by a management computer of the vehicle management system in Fig. 1;
Fig. 5 is a tabular view showing a display screen that appears during the process of Fig. 4; and
Fig. 6 is a flowchart of steps constituting a return process performed by the management computer of the vehicle management system in Fig. 1.

### BEST MODE FOR CARRYING OUT THE INVENTION

A preferred embodiment of this invention will now be described with reference to the accompanying drawings.

### (1) Structure of the embodiment

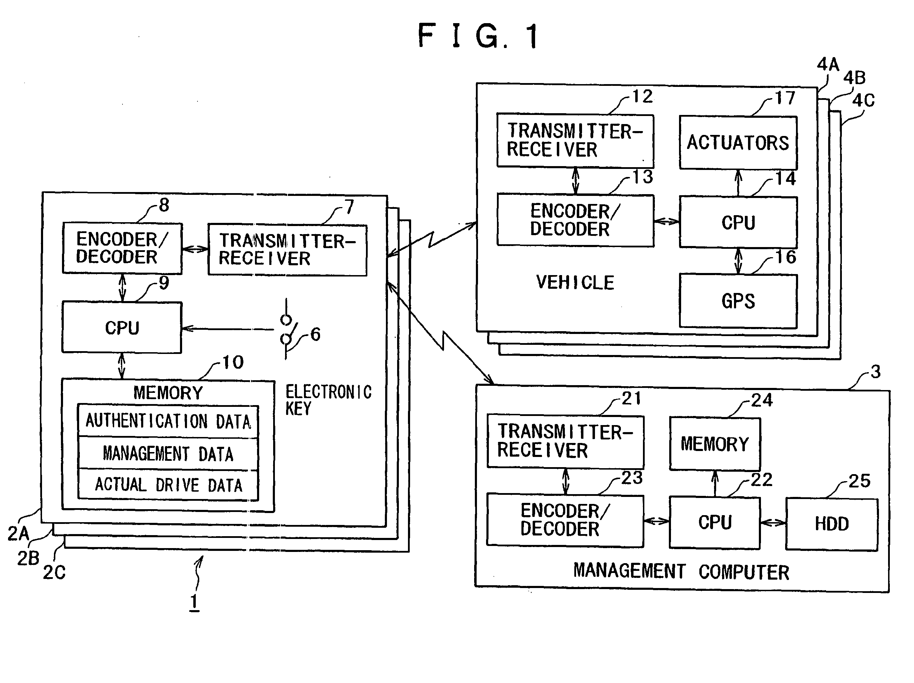

Fig. 1 is a block diagram of the vehicle management system practiced as one preferred embodiment of the invention. This vehicle management system 1 manages a plurality of vehicles 4A, 4B, 4C, etc., which in this example are rental cars, through the use of a management computer 3 in conjunction with electronic keys 2A, 2B, 2C, etc. In the description that follows, the electronic key 2A will be discussed in structure as a representative of the other electronic keys 2B, 2C, etc., which are structurally identical. Likewise the vehicle 4A will be described below representing the other vehicles 4B, 4C, etc., sharing the same structure. The other keys and vehicles will not be discussed further except where required or appropriate in the context.

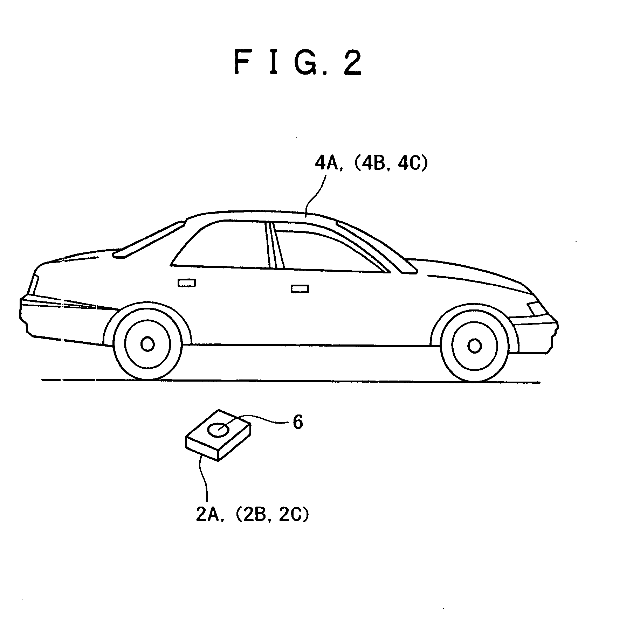

The electronic key 2A is a remote commander that at least locks and unlocks vehicle doors using a remote control signal. As shown in Fig. 2, the electronic key 2A has a board-like shape with a certain thickness. A user carrying the key may approach the applicable vehicle 4A and operate a pushbutton 6 on the commander surface to unlock the doors of the vehicle 4A preparatory to driving. Unlocked doors or the vehicle 4A are locked again by operating the electronic key 2A in the vicinity of the vehicle. The electronic key 2A can thus be used to take the place of the physical key to the vehicle 4A (4B, 4C, etc.).

In synchronism with the locking and unlocking of the doors of the vehicle 4A, the electronic key 2A can upload management data and download actual drive data to and from the vehicle 4A respectively. The downloaded actual drive data are stored in the electronic key 2A. Under instructions from the management computer 3, the electronic key 2A uploads the actual drive data held therein to the management computer 3 and simultaneously erases the stored data inside. Authentication data as well as management data in the electronic key 2A are updated in keeping with the switching of vehicles to which the key is to apply.

The authentication data are used here to authenticate the electronic key 2A with regard to the vehicle 4A (4B, 4C) as well as to the management computer 3. The data are made up of an identification code for identifying the applicable vehicle whose doors are to be operated by the key 2A, available period data indicating the period during which the applicable vehicle is made available using the key 2A, and management number data for use in rental management. The management data are constituted by user data, setting data, and restriction data. The user data are data about the user of the vehicle applicable to the electronic key 2A. Because the vehicle management system 1 of this embodiment addresses rental car management, the user data are illustratively composed of the name, age, address, telephone number, and driver's license number of the user who has signed a car rental contract. The setting data include seat position data, vehicle interior temperature data, and other data for establishing diverse settings associated with the vehicle. With this embodiment, the setting data are used to define the vehicle interior environment settings. The restriction data are made up of various data items determining the restrictions on vehicle operation. With this embodiment, the restrictions are defined under the car rental contract. More specifically, the restrictions include the distance allowed to be traveled, regions allowed to be covered, maximum speed, and other limits agreed on at the time of renting the vehicle.

The actual drive data are data representative of the actual drive of the vehicle. With this embodiment, the actual drive data typically include the actual distance traveled, actual regions covered, and other items corresponding to the current restrictions in place.

In the electronic key 2A, a transmitter-receiver 7 under control of a central processing unit (CPU) 9 processes output data from an encoder/decoder 8 so as to output a remote control signal. Conversely, the transmitter-receiver 7 receives a remote control signal from the vehicle 4A (4B, 4C, etc.) or from the management computer 3 and notifies the CPU 9 of the received signal. At the same time, the transmitter-receiver 7 processes the received remote control signal and outputs the result of the processing to the encoder/decoder 8. With this embodiment, the transmitter-receiver 7 is designed to send or receive remote control signals by radio transmission or by use of infrared rays.

The encoder/decoder 8 switches its operation under control of the CPU 9 and encodes data from the CPU 9 for output to the transmitter-receiver 7. Conversely, the encoder/decoder 8 processes data from the transmitter-receiver 7, decoding the data coming from the vehicle 4A (4B, 4C, etc.) or from the management computer 3 and outputting the decoded data to the CPU 9.

The CPU 9 is a controller that controls the electronic key 2A in its operation. In response to the user's operation on the pushbutton 6, the CPU 9 causes authentication data held in a memory 10 to be forwarded to the encoder/decoder 8. In turn, the electronic key 2A transmits authentication data from within to the applicable vehicle 4A (4B, 4C, etc.) to perform an authentication process with the vehicle.

If the authentication process turns out to be successful, the CPU 9 analyzes data received via the encoder/decoder 8 and outputs from the memory 10 to the encoder/decoder 8 the data corresponding to the result of the analysis. Conversely, the CPU 9 stores into the memory 10 the data coming subsequently from the encoder/decoder 8. In this manner, the electronic key 2A uploads the management data or downloads the actual drive data to or from the applicable vehicle respectively. The downloaded actual drive data are held in the electronic key 2A. The CPU 9 stores the actual drive data in the memory 10 in the form of a so-called difference file obtained upon comparison with the existing data in the memory 10.

Likewise, the CPU 9 analyzes data received via the encoder/decoder 8 and forwards from the memory 10 to the encoder/decoder 8 the authentication data corresponding to the result of the analysis. When called later by the management computer 3, the electronic key 2A transmits the authentication data to the computer 3 to perform an authentication process therewith.

If the authentication process is successful, the CPU 9 analyzes data received via the encoder/decoder 8 and outputs from the memory 10 to the encoder/decoder 8 the data corresponding to the result of the analysis. The CPU 9 then uploads to the management computer 3 the actual drive data stored in the memory 10. The CPU 9 further analyzes the data obtained subsequently from the encoder/decoder 8, and either updates or ultimately deletes the content of the memory 10 in accordance with the result of the analysis. After erasing the actual drive data from the memory 10, the CPU 9 replaces the existing authentication data and management data in the memory 10 with new authentication data and management data about the vehicle under a new rental contract.

In the vehicle 4A, a transmitter-receiver 12 notifies a central processing unit (CPU) 14 of a remote control signal coming from the electronic key 2A (2B, 2C, etc.). Under control of the CPU 14, the transmitter-receiver 12 process the remote control signal and outputs the result of the processing to an encoder/decoder 13. Conversely, the transmitter-receiver 12 processes the output data from the encoder-decoder 13 so as to output a remote control signal.

The encoder/decoder 13 switches its operation under control of the CPU 14, and encodes data from the CPU 14 to output the encoded data to the transmitter-receiver 12. The encoder/decoder 13 may conversely process the output data from the transmitter-receiver 12, decoding the data coming from the electronic key 2A (2B, 2C, etc.) and outputting the decoded data to the CPU 14.

A GPS (global positioning system) 16 works as a current position detecting mechanism of a car navigation system on board the vehicle 4A. Started up by instructions from the CPU 14, the GPS 16 outputs current position data to the CPU 14 as requested thereby.

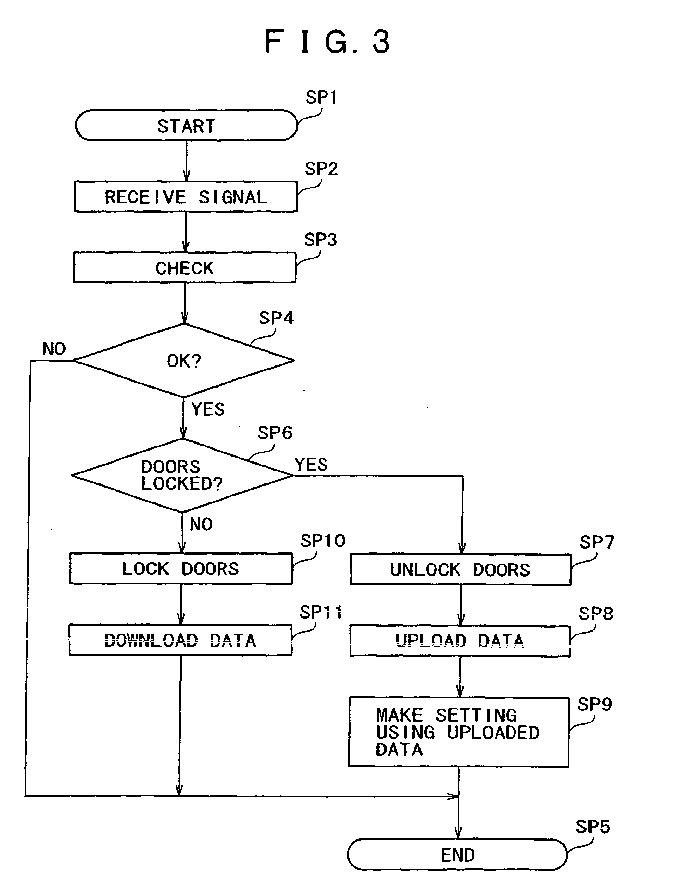

The CPU 14 is a controller that controls the vehicle 4A as a whole. In response to the actions of various operating elements, not shown, the CPU 14 drives actuators 17. That is, by responding to the user's operations, the CPU 14 can adjust the seat position and vehicle interior temperature and provide such offerings as the user's preferred type of music and a car navigation service. These settings combine to make up the user's preferred vehicle interior environment. In addition, the CPU 14 can start up windshield wipers and other vehicle functions by operating the relevant actuators 17 in response to the user's manipulations. Besides performing a series of actions responsive to the user's operations, the CPU 14 acquires current position data from the GPS 16 at predetermined intervals. The current position data allow the CPU 14 to determine where the vehicle is actually traveling. Furthermore, the CPU 14 carries out the steps shown in Fig. 3 by use of the output data from the encoder/decoder 13.

When notified of an incoming remote control signal by the transmitter-receiver 12, the CPU 14 goes from step SP1 to step SP2. In step SP2, the CPU 14 instructs the transmitter-receiver 12 to receive the remote control signal. At the same time, the CPU 14 causes the encoder/decoder 3 to process the received signal and acquires output data from the encoder/decoder 8 following the signal processing. With the vehicle management system 1 in operation, executing these steps allows the vehicle 4A (4B, 4C, etc.) to acquire the authentication data held in the electronic key 2A the moment the pushbutton 6 of the key 2A is pushed in the proximity of the vehicle 4A (4B, 4C, etc.).

In step SP3, the CPU 14 checks an identification code included in the acquired authentication data against memory records, not shown, to see if the available period has expired. With this vehicle management system 1, the management computer 3 records beforehand appropriate identification data to the electronic key 2A to be handed over to the user, so that in step SP3 a check can be made to see whether the vehicle 4A (4B, 4C, etc.) is duly authorized for rental use on the basis of the data in the key 2A. It is assumed that correct identification data have been recorded to all electronic keys applicable to all vehicles managed by this car rental business operator, so that the check in step SP3 will successfully match each of the keys against all applicable vehicles.

In step SP4, the CPU 14 determines whether the check in step SP3 is successful. If the check in step SP3 is not found successful, then step SP4 is followed by step SP5 in which this process is brought to an end. If the check in step SP3 turns out to be successful, step SP6 is reached. In step SP6, a check is made to see if the doors are currently locked. If the doors are found locked, the user or a system administrator is deemed to have given instructions to unlock the vehicle doors. In that case, the CPU 14 goes from step SP6 to step SP7. In step SP7, the CPU 14 drives the relevant actuators 17 to unlock the vehicle doors.

With the vehicle management system 1, as described, each vehicle 4A (4B, 4C, etc.) in the fleet rented to users can be unlocked only during the specified available period. If the administrator uses relevant keys, any of the vehicles can be unlocked as needed.

If the vehicle doors are unlocked in step SP7, the vehicle may have been rented to a new user. In that case, the CPU 14 reaches step SP8 and instructs the successfully authenticated electronic key 2A to send management data. That is, the management data are acquired from the electronic key 2A. The CPU 14 causes the applicable electronic key 2A to upload the management data to the vehicle.

In step SP9, the CPU 14 drives the relevant actuators 17 in keeping with the settings included in the acquired management data, whereby the vehicle interior environment is established in a manner reflecting the records in the electronic key 2A. Step SP9 is followed by step SP5 in which the process is brought to an end.

If the vehicle doors are not found locked in step SP6, that means the user has left the vehicle for a rest or for returning it. In that case, step SP6 is followed by step SP10 in which the relevant actuators 17 are driven to lock the doors. In step SP11, the actual drive data are downloaded to the applicable electronic key 2A via the encoder/decoder 13. Step SP11 is followed by step SP5 in which the process is terminated. The actual drive data include those about the regions actually traveled, the region data being constituted by the current position data obtained from the GPS 16.

The actual drive data thus downloaded are accumulated successively in the memory 10 of the electronic key 2A. The accumulated actual drive data are eventually uploaded to the management computer 3 and the content of the memory 10 is updated. That is, with the vehicle management system 1 in operation, every time the user leaves his or her vehicle, the actual drive data are downloaded to the electronic key 2A for storage. When the user returns the vehicle, the accumulated actual drive data are uploaded from the electronic key 2A to the management computer 3.

The management computer 3 is installed at the office counter over which the vehicle 4A (4B, 4C, etc.) is rented by contract and returned. Under control of the CPU 22, the transmitter-receiver 21 in the management computer 3 generates a remote control signal based on the output data from the encoder/decoder 23, and transmits the generated signal to the electronic key 2A. The transmitter-receiver 21 further receives a remote control signal from the electronic key 2A and outputs the received signal.

The encoder/decoder 23 under control of the CPU 22 encodes the output data from the CPU 22 and forwards the encoded data to the transmitter-receiver 21. Conversely, the encoder/decoder 23 decodes what is received by the transmitter-receiver 21 from the electronic key 2A and outputs the decoded data to the CPU 22.

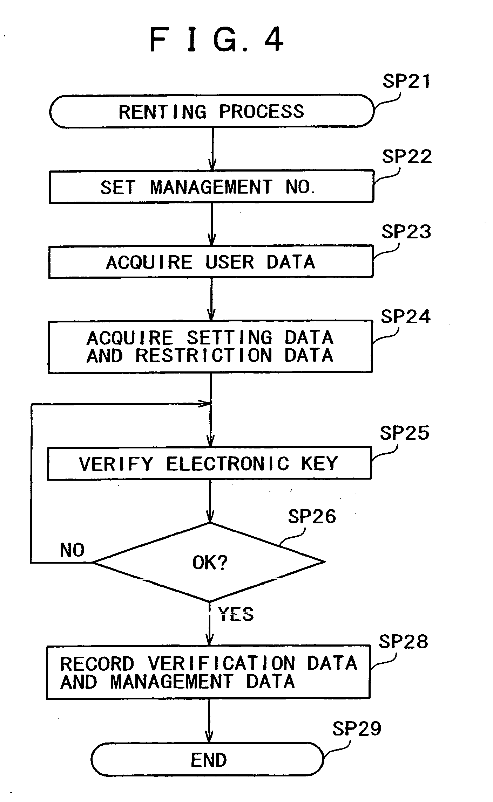

The CPU 22 is the arithmetic circuit of the management computer 3. When suitably operated by the operator, the CPU 22 allocates a work area in the memory 24 and performs series of steps recorded on a hard disc drive (HDD) 25. In executing the steps, the operator may select a renting process by which to rent the vehicle 4A (4B, 4C, etc.) to the user. The renting process of Fig. 4 is carried out by the CPU 22 as follows:

When the operator selects the renting process, the CPU 22 goes from step SP21 to step SP22. In step SP22, the CPU 22 references past contracts recorded on the hard disc drive 25 in order to establish a management number for the current rental contract. In step SP23, the CPU 22 displays an input screen of a predetermined tabular form indicating the established management number. Through entries into this input screen, the CPU 22 acquires user data and accepts the vehicle to be rented as well as a rental period desired.

A suitable operation performed by the operator prompts the CPU 22 to go from step SP23 to step SP24. In step SP24, the CPU 22 displays another input screen of a predetermined tabular form through which setting data and restriction data are acquired.

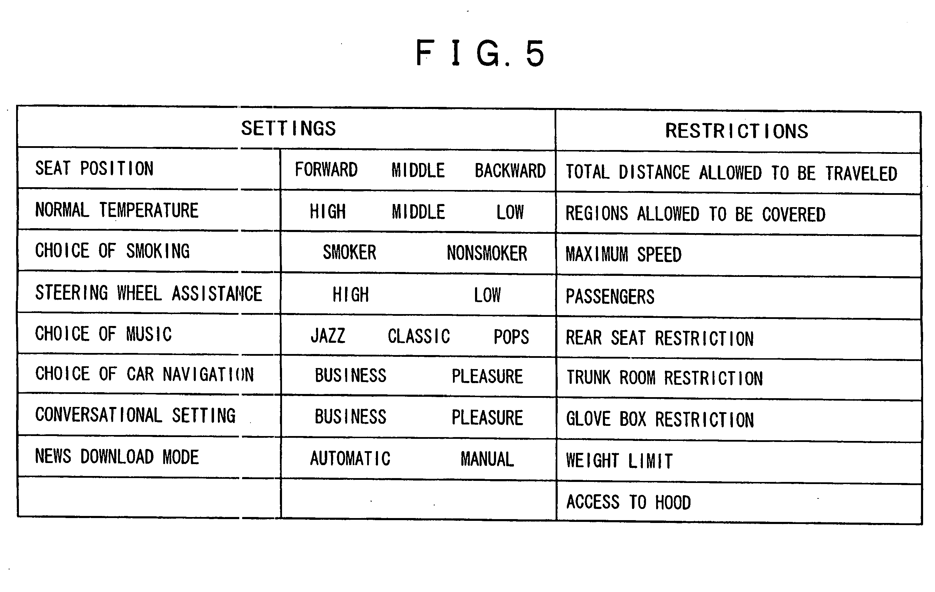

Fig. 5 shows an input screen of the tabular form. On the basis of the records on the hard disc drive 25, the CPU 22 displays on this screen selectable items of the setting data and restriction data associated with the user-selected vehicle.

In the table shown in Fig. 5, the "settings" items are items related to the setting data. Of these items, the "seat position" item allows the driver's seat position to be selected from one of three positions: forward, middle, and backward. The "normal temperature" item is an item allowing the vehicle interior temperature to be selected from one of three levels: high, middle, and low. The "choice of smoking" item is used to determine the settings of an interior air purifier. Either the "smoker" or the "nonsmoker" alternative is selected to establish a higher or a lower set point for the air purifier respectively. The "steering wheel assistance" item allows the intensity of steering wheel assistance to be adjusted to one of two levels: high or low. The "choice of music" item provides a menu of selectable music genres offered by a music database on board the vehicle. The available choices include jazz, classical music, and others. The "choice of car navigation" item is used to set an onboard car navigation system for one of two purposes: business or pleasure. Selecting one of the two alternatives determines the type of guidance offered by the car navigation system. The "conversational setting" item is an item allowing a conversational guidance system on board the vehicle to be set according to the purpose. Selecting either the "business" or the "pleasure" alternative determines the type of guiding conversation offered by this system. The "news download mode" item is used to set up a news download system on board the vehicle. Selecting either the "manual" or the "auto" alternative determines the mode in which news is downloaded from news sites.

The "restrictions" items in the table are items related to the restriction data. With this embodiment, the restrictions agreed on between the user and the rental company are listed in this table. The "total distance allowed to be traveled," "regions allowed to be covered," and "maximum speed" items represent the self-explanatory restrictions agreed on upon signing of the contract. The "passengers" item denotes the number of passengers also agreed on upon signing of the contract. The "rear seat restriction" item is an item that specifies whether or not the rear seat is to be used. The "trunk room restriction" and "glove box restriction" items designate the use or nonuse of the trunk room and the glove box respectively. The "weight limit" item denotes an agreed-on limit to the weight of the user's baggage. The "access to hood" item specifies whether or not access to the hood for a look inside is to be permitted.

With this embodiment, the rental charges of the vehicle are varied according to these restrictions. Before the charges are ultimately settled at the end of the term of the user's contract, checks will be made to see whether all the restrictions have been complied with on the basis of the actual drive data.

When the CPU 22 acquires the setting data and restriction data from the input screen, the CPU 22 displays a suitable indication asking for a confirmation. When acquisition of the necessary data is confirmed in step SP24, step SP25 is reached. In step SP25, the CPU 22 displays a message prompting the operator to position the electronic key 2A to be rented to the user onto a designated spot. With the electronic key 2A positioned as designated, the operator performs a verifying operation. This causes authentication data to be acquired from the electronic key 2A via the transmitter-receiver 21.

In step SP26, the CPU 22 checks to see whether the acquired authentication data correspond to the vehicle 4A (4B, 4C, etc.) managed by the management computer 3. If the result of the check in step SP26 is negative, that means an electronic key of another vehicle management system or of some other system is being mistakenly handled here. In that case, step SP26 is followed by step SP25 in which the operator is asked to change electronic keys. Thereafter the verification process is performed again.

If the electronic key 2A is successfully authenticated in step SP26, the key 2A is deemed to correspond with the vehicle 4A (4B, 4C, etc.) managed by the management computer 3. Following the successful authentication in step SP26, the CPU 22 goes to step SP28.

In step SP28, the CPU 22 sets an available period for the electronic key 2A based on the rental period, and generates verification data. After deleting the existing actual drive data from the electronic key 2A, the CPU 22 transmits the verification data and management data to the key 2A. The data transmission enables the electronic key 2A to be effective on the rented vehicle during the rental period, and records the rental-related management data to the key 2A at the same time.

In the manner described, the management computer 3 prepares and issues an electronic key 2A effective on the vehicle to be rented in keeping with the contract signed by the user. The diverse data related to the contract are recorded to the electronic key 2A.

The recorded data are uploaded from the electronic key 2A to the applicable vehicle. The actual drive data retrieved from the vehicle are accumulated in the electronic 2A. The key with its accumulated drive data is eventually returned together with the vehicle.

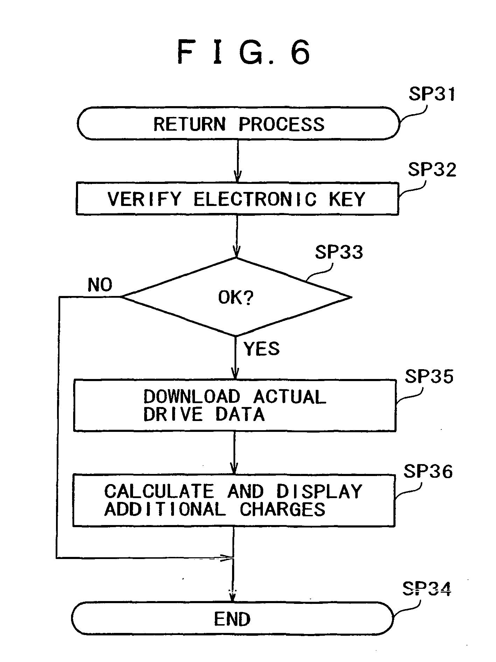

Fig. 6 is a flowchart of steps constituting the process carried out by the CPU 22 when the rented vehicle is returned. The CPU 22 is prompted to perform the process of Fig. 6 when the operator performs a suitable operation in a predetermined menu. With the process thus started, the CPU 22 goes from step SP31 to step SP32. In step SP32, the CPU 22 displays an appropriate message asking the operator to position the electronic key 2A returned from the user onto a predetermined spot. The operator is then prompted to perform operations ordering the electronic key 2A to output the verification data and user data. The output data are acquired by the CPU 22. The CPU 22 checks the verification data and user data against those in effect at the time of renting out the vehicle.

In step SP33, the CPU 22 checks to see whether the data are matched. If the result of the check is negative, the electronic key 2A is considered applicable to a different vehicle. In that case, step SP33 is followed by step SP34 in which the process is brought to an end.

If the data are found to match in step SP33, the CPU 22 goes from step SP33 to step SP35. In step SP35, the CPU 22 downloads the actual drive data from the electronic key 2A. In step SP36, the CPU 22 compares the actual drive data with the management data recorded on the hard disc drive 25, so as to determine whether the total distance allowed to be traveled, regions allowed to be covered, and other restrictions agreed on at the time of signing the contract have been complied with. If any of the restrictions is found to have been exceeded by the corresponding data derived from the actual drive, additional charges are calculated and displayed. Step SP36 is followed by step SP34 where the process is terminated.

With the management computer 3, as described, the restrictions are set up minutely before the vehicle is rented out. If any of the restrictions is found exceeded, additional charges are computed and collected. This makes it easy for users to rent and utilize vehicles and for the business operator to manage the rented vehicles.

If the user changes the seat position or other settings included in the management data, the CPU 14 of the vehicle 4A records such changes along with the actual drive data to the electronic key 2A. The CPU 22 of the management computer 3 later downloads the recorded changes together with the actual drive data from the electronic key 2A. Furthermore, the CPU 22 modifies the setting data in effect upon signing of the contract on the basis of the user-changed data, thereby generating the setting data defining the interior environment of the vehicle 4A as desired by the user. The CPU 22 records the setting data thus generated to the hard disc drive 25 along with the user data and actual drive data, creating a database. Next time a vehicle is rented to the same user, the acquisition of management data through the input screen performed in step SP24 of Fig. 4 will be replaced by the recording of the management data derived from the database to the applicable electronic key 2A. That is, the embodiment can transfer to any other vehicle the setting data about a given vehicle interior environment by effectively utilizing the electronic key 2A. It follows that on any vehicle that may be rented to the user, the vehicle interior environment can be properly reproduced to reflect the user's preferences.

On the vehicle 4A, the transmitter-receiver 12, encoder/decoder 13, and CPU 14 make up a transmitting element. This element allows the actual drive data to be transmitted from the vehicle to the applicable electronic key 2A, in such a manner that the data will be ultimately downloaded to the management computer 3 (i.e., data processing apparatus) via the electronic key 2A.

In the electronic key 2A, the transmitter-receiver 7, encoder/decoder 8, and CPU 9 make up a receiving element that receives the actual drive data from the applicable vehicle 4A. The memory 10 constitutes a recording element for recording the actual drive data received. The transmitter-receiver 7, encoder/decoder 8, and CPU 9 also make up a transmitting element that transmits the recorded actual drive data from the recording element to the management computer 3 (data processing apparatus).

In the management computer 3, the transmitter-receiver 21, encoder/decoder 23, and CPU 22 make up a data acquiring element. This element acquires data for identifying the vehicle 4A as well as the actual drive data about the vehicle 4A from the electronic key 2A that operates the door locks of the applicable vehicle 4A using a remote control signal. The CPU 22 further constitutes a data processing element that processes the actual drive data.

### (2) Operation of the embodiment

Structured as described above, the vehicle management system 1 (Figs. 1, 4 and 5) works as follows when a vehicle is rented to a user: the management computer 3 first acquires user data such as the user's name, allows the user to select a preferred vehicle, accepts a desired rental period, and acquires setting data for setting the vehicle interior environment as well as restriction data for defining diverse restrictions on the renting of the vehicle. All such data together with authentication data about the user-selected vehicle are transmitted to the electronic key 2A for storage into its memory 10. Operating the electronic key 2A controls the door locks of the vehicle 4A rented out to the user and turns the vehicle 4A ready for the user to drive.

When the pushbutton 6 of the electronic key 2A is pushed in the proximity of the applicable vehicle 4A, the authentication data held in the key 2A are transmitted to the vehicle 4 for authentication by the CPU 14. With the vehicle management system 1 in use, the electronic key 2A remains effective on the vehicle 4A during an available period granted to the user. During that period, operating the electronic key 2A unlocks the vehicle doors so that the user can drive the vehicle 4A (Figs. 2 and 3).

If the authentication process involving the transmitted authentication data turns out to be successful, the setting data and restriction data held in the memory 10 are transmitted from the electronic key 2A to the vehicle 4A within the vehicle management system 1. Of the received data, the setting data cause the relevant actuators 17 to be operated, whereby the seat position, vehicle interior temperature, and other necessary settings are established. That is, the setting data are used to establish the vehicle interior environment as desired by the user.

With the interior environment of the vehicle thus established, the user starts driving the vehicle 4A. At predetermined intervals, the GPS 16 on board the vehicle 4A detects its current position. The current position data are recorded to the memory by the CPU 14 together with the maximum speed and other relevant data. If the user changes the interior environment, the data representing the change are recorded to the memory.

Upon receipt of the authentication data from the electronic key 2A, the vehicle 4A in a stationary state carries out an authentication process. If the process verifies that the received data are from the applicable electronic key 2A and that the vehicle doors are currently unlocked, the data cause the vehicle 4A to unlock its doors. This may turn out to be the occasion on which the user returns the vehicle 4A. If that is the case, the user's actual drive data along with the data representative of any changes in the vehicle interior environment are transmitted to the electronic key 2A for storage into its memory 10.

In this manner, every time the user leaves the vehicle 4A typically for a rest, the actual drive data are accumulated in the electronic key 2A together with the data related to any interior environment changes that have been made by the user.

When the user returns the vehicle (Fig. 6) together with the electronic key 2A having the actual drive data and other relevant data accumulated therein, the management computer 3 of this vehicle management system 1 verifies whether the electronic key 2A is authentic. When the electronic key 2A is successfully authenticated, the actual drive data and interior environment change data are downloaded from the key 2A to the management computer 3. If the actual drive data reveal that any of the restrictions agreed on at the time of signing the contract has been exceeded by the user, additional charges are calculated to reflect the excess and are paid by the user. The embodiment allows the actual drive data about the vehicle to be acquired via the electronic key 2A as described. That means the actual distance traveled, actual regions covered, and other relevant data are easily obtained. An effective use of the electronic key 2A thus makes vehicle management appreciably simpler than before.

The management computer 3 corrects the setting data in a manner reflecting the data that denote changes in the vehicle interior environment. The obtained actual drive data are recorded to the hard disc drive 25 along with the corrected setting data and user data, whereby the database is created. If a particular user rents the same vehicle that he or she rented before or if the user rents a different vehicle this time, the applicable setting data are retrieved from the database on the hard disc drive 25 and recorded to the electronic key 2A. When the vehicle management system 1 allows the vehicle interior environment data regarding the same user to be shared between vehicles in this manner, users can enjoy enhanced convenience.

If authentication data are updated every time the setting data are recorded to the electronic key 2A (2B, 2C, etc.), there is no need to manage the electronic keys in strict correspondence with the vehicles; the keys may be controlled independently of the vehicles. This makes it easier to manage the keys and the vehicles than ever.

### (3) Effects of the embodiment

The above-described structure allows the embodiment to acquire actual drive data on vehicles through the intermediary of electronic keys used to operate their door locks. The structure provides a much more simplified scheme of vehicle management than before.

### (4) Variations

Although the embodiment above was shown to calculate rental charges of each vehicle by processing its actual drive data, this is not limitative of the invention. Alternatively, insurance premiums for the vehicle may be calculated in keeping with its actual drive data. For example, sporty vehicles are generally thought likely to be rented by people who prefer driving fast. Driving at high speeds is known to incur more accidents. However, not all people who rent the sporty vehicle drive so fast. Variations in the actually recorded speeds may then be taken into account when the insurance premiums are calculated. This makes it possible to collect the premiums in a manner optimally reflecting the actual drive data about the type of vehicle in question. If the invention is applied to computing insurance premiums based on actual drive data and if the vehicles to be managed are owned by individual users, it is possible to upload the actual drive data held in the electronic keys to a management center through the intermediary of user-owned computers. The uploaded data may then be used as a basis for calculating the insurance premiums.

Although the above-described embodiment was shown recording the actual drive data to the electronic key along with the data about changes in the vehicle interior environment prior to download, this is not limitative of the invention. Alternatively, the actual drive data may be recorded to the electronic key in combination with data about symptoms indicative of any vehicle trouble, such as abnormalities in radiator temperature or oil level.

Whereas the embodiment above was presented as a vehicle management system typically applied to the car rental business, this is not limitative of the invention. Alternatively, the invention can apply extensively to systems that manage vehicles for package delivery, vehicles for hire such as taxis, and vehicles owned by individuals.

As described, the invention provides a system for acquiring actual drive data from vehicles through the intermediary of electronic keys used to operate their door locks. The inventive scheme makes it appreciably simpler to manage vehicles than before.

### INDUSTRIAL APPLICABILITY

The present invention relates to a vehicle managing method illustratively for use in managing vehicles in the car rental business.

## Claims

1. A vehicle managing system comprising
at least one vehicle (4A, 4B, 4C) having means (17) for locking and unlocking doors of said vehicle (4A, 4B, 4C) in response to a remote control signal, means (16) for detecting the current position of said vehicle (4A, 4B, 4C) at predetermined intervals and means (12) for transmitting actual drive data about said vehicle; and
at least one electronic key (2A, 2B, 2C) for operating door locks of said vehicle (4A, 4B, 4C) by use of said remote control signal, said electronic key (2A, 2B, 2C) comprises means (7) for receiving said actual drive data from said vehicle (4A, 4B, 4C), storage means (10) for storing said actual drive data and means (7) for transmitting said actual drive data to a data processing apparatus (3),
**characterized in that**
said transmitting means (12) is adapted to transmit said actual drive data to said electronic key (2A, 2B, 2C) including position data of said vehicle (4A, 4B, 4C) detected by said current position detecting means (16) whenever the doors of said vehicle (4A, 4B, 4C) are locked in response to said remote control signal.

2. A vehicle managing system according to claim 1, wherein said vehicle (4A, 4B, 4C) further comprises means (14) for acquiring, whenever the doors of said vehicle (4A, 4B, 4C) are unlocked in response to said remote control signal, from said electronic key (2A, 2B, 2C), management data including user data, setting data used to define the vehicle settings of the user and restriction data associated with said vehicle (4A, 4B, 4C).

3. A vehicle managing system according to claim 2, wherein
said electronic key (2A, 28, 2C) comprises decoding means (8) for decoding data received from said vehicle (4A, 4B, 4C) and an encoding means (8) for encoding data to be transmitted to said vehicle (4A, 4B, 4C).

4. A vehicle managing system according to claims 2 or 3, further comprising
said data processing apparatus (3) having means for providing (SP24) said management data, means for transmitting said management data to said electronic key (2A, 2B, 2C), means (21) for receiving said actual drive data from said electronic key and means (SP36) for calculating rental charges based on said actual drive data, wherein said restriction data determine the restriction on the vehicle operation defined under a rental contract and said rental charges calculating means (SP36) is adapted to compare the actual drive data with said restriction data and to calculate additional charges if the restriction on the vehicle operation defined under said rental contract is exceeded.

5. A vehicle managing system according to claim 4, wherein
said restriction data include information of regions in which the driving with the vehicle (4A, 4B, 4C) is allowed and said rental charges calculating means (SP36) is adapted to determine, based on position data stored in said electronic key (2A, 2B, 2C), for calculating rental charges of said vehicle, whether said vehicle (4A, 4B, 4C) was driven to regions which were not allowed.

6. A vehicle managing method comprising the steps of:
providing (SP24) restriction data associated with a selected vehicle (4A, 4B, 4C);
recording (SP28) said restriction data on an electronic key (2A, 2B, 2C) for operating door locks of said vehicle;
detecting (16) the current position of said vehicle (4A, 4B, 4C) at predetermined intervals; and
receiving (SP11) actual drive data from said vehicle by said electronic key (2A, 2B, 2C); and
recording said actual drive data on said electronic key (2A, 2B, 2C);
**characterized in that**
said actual drive data including position data of said vehicle (4A, 4B, 4C) detected in said detecting step (16) are transmitted (12) to said electronic key (2A, 2B, 2C) whenever the doors of said vehicle (4A, 4B, 4C) are locked.

7. A vehicle managing method according to claim 6, wherein
management data including user data, setting data used to define the vehicle settings of the user and restriction data associated with said vehicle (4A, 4B, 4C) are acquired (14) by said vehicle (4A, 4B, 4C) from said electronic key (2A, 2B, 2C) whenever the doors of said vehicle (4A, 4B, 4C) are unlocked.

8. A vehicle managing method according to claim 7, further comprising the steps of:
decoding (8) data received by said electronic key (2A, 2B, 2C); and
encoding (8) data to be transmitted from said electronic key (2A, 2B, 2C) to said vehicle (4A, 4B, 4C).

9. A vehicle managing method according to claim 7 or 8, wherein
said management data are provided by a data processing apparatus (3) and transmitted from said data processing apparatus (3) to said electronic key (2A, 2B, 2C), wherein rental charges are calculated by said data processing apparatus (3) based on said actual drive data received from said electronic key, wherein said restriction data determine the restriction on the vehicle operation defined under a rental contract and the actual drive data are compared with said restriction data, wherein additional charges are calculated if the restriction on the vehicle operation defined under said rental contract is exceeded.

10. A vehicle managing method according to claim 9, wherein
said restriction data include information of regions in which the driving with the vehicle (4A, 4B, 4C) is allowed and said data processing apparatus (3) determines, based on position data stored in said electronic key (2A, 2B, 2C), for calculating rental charges of said vehicle, whether said vehicle (4A, 4B, 4C) was driven to regions which were not allowed.

## Patentansprüche

1. Fahrzeugverwaltungssystem, mit
wenigstens einem Fahrzeug (4A, 4B, 4C) mit einer Einrichtung (17) zum Verriegeln und Entriegeln von Türen des Fahrzeugs (4A, 4B, 4C) als Reaktion auf ein Fernsteuersignal, einer Einrichtung (16) zum Erfassen der aktuellen Position des Fahrzeugs (4A, 4B, 4C) in vorbestimmten Intervallen und einer Einrichtung (12) zum Übe rtragen aktueller Fahrdaten über das Fahrzeug; und
wenigstens einem elektronischen Schlüssel (2A, 2B, 2C) zum Betätigen von Türverriegel ungen des Fahrzeugs (4A, 4B, 4C) unter Verwendung des Fernsteuersignals, wobei der elektronische Schlüssel (2A, 2B, 2C) eine Einrichtung (7) zum Empfangen der aktuellen Fahrdaten vom Fahrzeug (4A, 4B, 4C), eine Speichereinrichtung (10) zum Speichern der aktuellen Fahrdaten und eine Einrichtung (7) zum Übertragen der aktuellen Fahrdaten an eine Datenverarbeitungsvorrichtung (3) aufweist,
**dadurch gekennzeichnet,**
**dass** die Übertragungseinrichtung (12) ausgebildet ist, um die aktuellen Fahrdaten einschließlich durch die Erfassungseinrichtung der aktuellen Position (16) erfasster Positionsdaten des Fahrzeugs (4A, 4B, 4C) an den elektronischen Schlüssel (2A, 2B, 2C) zu übe rtragen, wann immer die Türen des Fahrzeugs (4A, 4B, 4C) als Reaktion auf das Fernsteuersignal verriegelt werden.

2. Fahrzeugverwaltungssystem nach Anspruch 1, bei welchem das Fahrzeug (4A, 4B, 4C) ferner eine Einrichtung (14) zum Anfordern von Verwaltungsdaten einschließlich Benutzerdaten, zum Definieren der Fahrzeugeinstellungen des Benutzers verwendeter Einstellungsdaten und Einschränkungsdaten in Zusammenhang mit dem Fahrzeug (4A, 4B, 4C) von dem elektronischen Schlüssel (2A, 2B, 2C), wann immer die Tü ren des Fahrzeugs (4A, 4B, 4C) als Reaktion auf das Fernsteuersignal entriegelt werden, aufweist.

3. Fahrzeugverwaltungssystem nach Anspruch 2, bei welchem der elektronische Schlüsse I (2A, 2B, 2C) eine Decodiereinrichtung (8) zum Decodieren der vom Fahrzeug (4A, 4B, 4C) empfangenen Daten und eine Codiereinrichtung (8) zum Codieren der an das Fahrzeug (4A, 4B, 4C) zu übertragenden Daten aufweist.

4. Fahrzeugverwaltungssystem nach Anspruch 2 oder 3, bei welchem die Datenverarbeitungsvorrichtung (3) eine Einrichtung zum Bereitstellen (SP24) der Verwaltungsdaten, eine Einrichtung zum Übertragen der Verwaltungsdaten an den elektronischen Schlüssel (2A, 2B, 2C), eine Einrichtung (21) zum Empfangen der aktuellen Fahrdaten vom elektronischen Schlüssel un d eine Einrichtung (SP36) zum Berechnen von Mietgebühre n basierend auf den aktuellen Fahrdaten aufweist, wobei die Einschränkungsdaten die Einschränkung des Fahrzeugbetriebs, die in einem Mietvertrag definiert ist, bestimmen und die Mietgebü hrenberechnungseinrichtung (SP36) ausgebildet ist, um die aktuellen Fahrdaten mit den Einschränku ngsdaten zu vergleichen und zusätzliche Gebühre n zu berechnen, falls die im Mietvertrag definierte Einschränkung des Fahrzeugbetriebs überschritten wird.

5. Fahrzeugverwaltungssystem nach Anspruch 4, bei welchem die Einschränkun gsdaten Informationen von Bereichen enthält, in denen das Fahren mit dem Fahrzeug (4A, 4B, 4C) erlaubt ist, und die Mietgebühre nberechnungseinrichtung (SP36) ausgebildet ist, um basierend auf im elektronischen Schlüssel (2A , 2B, 2C) gespeicherten Positionsdaten für die Berechnung der Mietgebü hren des Fahrzeugs zu bestimmen, ob das Fahrzeug (4A, 4B, 4C) in Bereiche gefahren wurde, die nicht erlaubt waren.

6. Fahrzeugverwaltungsverfahren, mit den Schritten:
Vorsehen (SP24) von Einschränku ngsdaten in Zusammenhang mit einem ausgewählten Fahrzeug (4A, 4B, 4C);
Aufzeichnen (SP28) der Einschränkungsdaten an einem elektronischen Schlüssel (2A, 2B, 2C) zum Betätigen von Tü rverriegelungen des Fahrzeugs;
Erfassen der aktuellen Position des Fahrzeugs (4A, 4B, 4C) in vorbestimmten Intervallen; und
Empfangen (SP11) von aktuellen Fahrdaten vom Fahrzeug durch den elektronischen Schlüssel (2A, 2B, 2C); und
Aufzeichnen der aktuellen Fahrdaten am elektronischen Schlüssel (2 A, 2B, 2C),
**dadurch gekennzeichnet,**
**dass** die im Erfassungsschritt (16) erfassten aktuellen Fahrdaten einschließlich der Positionsdaten des Fahrzeugs (4A, 4B, 4C) an den elektronischen Schlüssel (2A, 2B, 2C) übertra gen werden (12), wann immer die Türe n des Fahrzeugs (4A, 4B, 4C) verriegelt werden.

7. Fahrzeugverwaltungsverfahren nach Anspruch 6, bei welchem die Verwaltungsdaten einschließlich Be nutzerdaten, zum Definieren der Fahrzeugeinstellungen des Benutzers verwendeter Einstellungsdaten und Einschränkungsdaten in Zusammenhang mit dem Fahrzeug (4A, 4B, 4C) durch das Fahrzeug (4A, 4B, 4C) vom elektronischen Schlüssel (2A, 2B, 2C) angefordert werden (14), wann immer die Türe n des Fahrzeugs (4A, 4B, 4C) entriegelt werden.

8. Fahrzeugverwaltungsverfahren nach Anspruch 7, ferner mit den Schritten:
Decodieren (8) von Daten, die durch den elektronischen Schlüssel (2 A, 2B, 2C) empfangen werden; und
Codieren (8) von Daten, die vom elektronischen Schlüssel (2A, 2B, 2C) an das Fahrzeug (4A, 4B, 4C) übertra gen werden sollen.

9. Fahrzeugverwaltungsverfahren nach Anspruch 7 oder 8, bei welchem die Verwaltungsdaten durch eine Datenverarbeitungsvorrichtung (3) bereitgestellt und von der Datenverarbeitungsvorrichtung (3) an den elektronischen Schlüssel (2A, 2B, 2C) übertra gen werden, Mietgebü hren durch die Datenverarbeitungsvorrichtung (3) basierend auf den vom elektronischen Schlüssel empfangenen aktuellen Fahrdaten berechnet werden, die Einschrän kungsdaten, die die in einem Mietvertrag definierte Einschränkung des Fahrzeugbetriebs bestimmen und die aktuellen Fahrdaten mit den Einschränkungsdaten verglichen werden, zusätzliche Gebühren berechnet werden, falls die im Mietvertrag definierte Einschränkung des Fahrzeugbetriebs überschritten wird.

10. Fahrzeugverwaltungsverfahren nach Anspruch 9, bei welchem die Einschränkungsdaten Informationen über Bereiche enthalten, in denen das Fahren mit dem Fahrzeug (4A, 4B, 4C) erlaubt ist, und die Datenverarbeitungsvorrichtung (3) basierend auf im elektronischen Schlüssel ( 2A, 2B, 2C) gespeicherten Positionsdaten zum Berechnen der Mietgebühre n des Fahrzeugs bestimmt, ob das Fahrzeug (4A, 4B, 4C) in Bereiche gefahren wurde, die nicht erlaubt waren.

## Revendications

1. Système de gestion de parc automobile, comprenant :
au moins un véhicule (4A, 4B, 4C) qui comprend des moyens (17) pour verrouiller et déverrouiller des portières dudit véhicule (4A, 4B, 4C) en réponse à un signal de commande distant, des moyens (16) pour détecter la position actuelle dudit véhicule (4A, 4B, 4C) à des intervalles de temps prédéterminés, et des moyens (12) pour transmettre des données de conduite effective à propos dudit véhicule ; et
au moins une clé électronique (2A, 2B, 2C) pour actionner les verrous des portières dudit véhicule (4A, 4B, 4C) en utilisant ledit signal de commande distant, ladite clé électronique (2A, 2B, 2C) comprenant des moyens (7) pour recevoir lesdites données de conduite effective en provenance dudit véhicule (4A, 4B, 4C), des moyens de stockage (10) pour enregistrer lesdites données de conduite effective, et des moyens (7) pour transmettre lesdites données de conduite effective vers un dispositif de traitement de données (3),
**caractérisé en ce que** :
lesdits moyens de transmission (12) sont adaptés pour transmettre lesdites données de conduite effective vers ladite clé électronique (2A, 2B, 2C) comprenant des données de position dudit véhicule (4A, 4B, 4C) détectées par lesdits moyens de détection de position actuelle (16) chaque fois que les portières dudit véhicule (4A, 4B, 4C) sont verrouillées en réponse au dit signal de commande distant.

2. Système de gestion de parc automobile selon la revendication 1, dans lequel :
ledit véhicule (4A, 4B, 4C) comprend par ailleurs des moyens (14) pour acquérir, chaque fois que les portières dudit véhicule (4A, 4B, 4C) sont déverrouillées en réponse au dit signal de commande distant, en provenance de ladite clé électronique (2A, 2B, 2C), des données de gestion qui comprennent des données d'utilisateur, des données de paramétrage utilisées afin de définir les paramètres du véhicule de l'utilisateur, et des données de restriction associées au dit véhicule (4A, 4B, 4C).

3. Système de gestion de parc automobile selon la revendication 2, dans lequel :
ladite clé électronique (2A, 2B, 2C) comprend des moyens de décodage (8) pour décoder des données reçues en provenance dudit véhicule (4A, 4B, 4C), et des moyens de codage (8) pour coder des données destinées à être transmises vers ledit véhicule (4A, 4B, 4C).

4. Système de gestion de parc automobile selon les revendication 2 ou 3, comprenant par ailleurs :
le fait que ledit dispositif de traitement de données (3) comprend des moyens pour fournir (SP24) lesdites données de gestion, des moyens pour transmettre lesdites données de gestion vers ladite clé électronique (2A, 2B, 2C), des moyens (21) pour recevoir lesdites données de conduite effective en provenance de ladite clé électronique, et des moyens (SP36) pour calculer des frais de location en se basant sur lesdites données de conduite effective, dans lequel lesdites données de restriction déterminent la restriction qui s'applique au fonctionnement du véhicule définie dans le cadre d'un contrat de location, et lesdits moyens (SP36) de calcul de frais de location sont adaptés pour comparer les données de conduite effective aux dites données de restriction et pour calculer des frais supplémentaires si la restriction qui s'applique au fonctionnement du véhicule définie dans le cadre dudit contrat de location est outrepassée.

5. Système de gestion de parc automobile selon la revendication 4, dans lequel :
lesdites données de restriction comprennent des informations relatives à des régions dans lesquelles la conduite avec le véhicule (4A, 4B, 4C) est autorisée, et lesdits moyens (SP36) de calcul de frais de location sont adaptés pour déterminer - en se basant sur des données de position enregistrées dans ladite clé électronique (2A, 2B, 2C) afin de calculer des frais de location dudit véhicule - si ledit véhicule (4A, 4B, 4C) a été - ou non - conduit vers des régions qui n'étaient pas autorisées.

6. Procédé de gestion de parc automobile comprenant les étapes consistant à :
fournir (SP24) des données de restriction associées à un véhicule sélectionné (4A, 4B, 4C) ;
enregistrer (SP28) lesdites données de restriction sur une clé électronique (2A, 2B, 2C) en vue d'un actionnement des verrous des portières dudit véhicule ;
détecter (16) la position actuelle dudit véhicule (4A, 4B, 4C) à des intervalles de temps prédéterminés ; et
recevoir (SP11) des données de conduite effective en provenance dudit véhicule, par ladite clé électronique (2A, 2B, 2C) ; et
enregistrer lesdites données de conduite effective sur ladite clé électronique (2A, 2B, 2C) ;
**caractérisé en ce que** :
lesdites données de conduite effective - qui comprennent des données de position dudit véhicule (4A, 4B, 4C) détectées au cours de ladite étape de détection (16) - sont transmises (12) vers ladite clé électronique (2A, 2B, 2C) chaque fois que les portières dudit véhicule (4A, 4B, 4C) sont verrouillées.

7. Procédé de gestion de parc automobile selon la revendication 6, dans lequel :
des données de gestion qui comprennent des données d'utilisateur, des données de paramétrage utilisées afin de définir les paramètres du véhicule de l'utilisateur, et des données de restriction associées au dit véhicule (4A, 4B, 4C) sont acquises (14) par ledit véhicule (4A, 4B, 4C) à partir de ladite clé électronique (2A, 2B, 2C) chaque fois que les portières dudit véhicule (4A, 4B, 4C) sont déverrouillées.

8. Procédé de gestion de parc automobile selon la revendication 7, comprenant par ailleurs les étapes consistant à :
décoder (8) des données reçues par ladite clé électronique (2A, 2B, 2C) ; et
coder (8) des données destinées à être transmises depuis ladite clé électronique (2A, 2B, 2C) vers ledit véhicule (4A, 4B, 4C).

9. Procédé de gestion de parc automobile selon la revendication 7 ou 8, dans lequel :
lesdites données de gestion sont fournies par un dispositif de traitement de données (3) et sont transmises depuis ledit dispositif de traitement de données (3) vers ladite clé électronique (2A, 2B, 2C), dans lequel des frais de location sont calculés par ledit dispositif de traitement de données (3) en se basant sur lesdites données de conduite effective reçues en provenance de ladite clé électronique, dans lequel lesdites données de restriction déterminent la restriction qui s'applique au fonctionnement du véhicule définie dans le cadre d'un contrat de location, et les données de conduite effective sont comparées aux dites données de restriction, dans lequel des frais supplémentaires sont calculés si la restriction qui s'applique au fonctionnement du véhicule définie dans le cadre dudit contrat de location est outrepassée.

10. Procédé de gestion de parc automobile selon la revendication 9, dans lequel :
lesdites données de restriction comprennent des informations relatives à des régions dans lesquelles la conduite avec le véhicule (4A, 4B, 4C) est autorisée, et ledit dispositif de traitement de données (3) détermine - en se basant sur des données de position enregistrées dans ladite clé électronique (2A, 2B, 2C) afin de calculer des frais de location dudit véhicule - si ledit véhicule (4A, 4B, 4C) a été - ou non - conduit vers des régions qui n'étaient pas autorisées.
